# EUROPEAN PATENT APPLICATION

(11) **EP 4 768 244 A1**
(43) Date of publication of application: **01.07.2026**
(21) Application number: 25227696.9
(22) Date of filing: 30.12.2025
(51) Int. Cl.: B32B 29/00, B32B 5/02, B32B 11/06, B32B 13/08, B32B 15/12, B32B 15/20, B32B 17/02, B32B 27/10, B32B 27/12, B32B 27/30, B32B 27/32, B32B 27/40

(54) **MULTILAYER RADON-IMPERMEABLE BARRIER MATERIAL**

(30) Priority: 30.12.2024 PT 2024119947
(71) Applicant: Oprimee - Innovation Design Engineering Solutions, Lda, 3405-155 Oliveira do Hospital (PT)
(72) Inventor: DOS SANTOS ALMEIDA NUNES, JOÃO MIGUEL, 3405-155 OLIVEIRA DO HOSPITAL (PT)
(74) Representative: Patentree

(57) **Abstract**

This disclosure relates to a novel radon-impermeable material designed to prevent radon gas infiltration into buildings designed to mitigate health risks associated with radon exposure.

It is disclosed a multilayer radon-impermeable barrier material comprising a multilayer structure with at least the following layers: a substrate layer, at least one outer layer fitted on top of the substrate layer, wherein the at least one outer layer comprises cellulose layer and a resin material; the multilayer radon-impermeable barrier material exhibits a radon gas permeability such that when subjected to a radon concentration of at least 45,000 Bq/m³ on one side of the material, the radon flux measured on an opposite side of the material is less than 1 Bq/h.

## Description

### TECHNICAL FIELD

The present disclosure relates to a multilayer radon-impermeable barrier material.

### BACKGROUND

Radon is a major contributor to environmental radioactivity, a naturally occurring radioactive gas resulting from the decay of uranium and radium in the Earth's crust. The concentration of radon varies depending on geographic location and soil composition.

Given that people spend the majority of their time indoors, indoor air quality is a critical concern. On average, 90% of daily activities take place in buildings, like homes, workplaces, service areas, and leisure spaces, therefore indoor air quality is influenced by various factors, including contamination sources, such as biological, physical, or chemical, building materials and structure, environmental conditions, occupant habits, heating and cooling systems, and ventilation. Radon concentration is a significant factor in indoor air quality and poses health risks.

While outdoor radon concentrations are typically low, ranging from 0.1 Bq/m³ to 10 Bq/m³, indoor levels often reach much higher concentrations, sometimes in the thousands of Bq/m³. The geological composition of the underlying soil significantly affects indoor radon levels. Granite-rich areas tend to have higher radon concentrations, while regions dominated by sedimentary rocks, such as limestone, typically have lower levels. Radon enters buildings through cracks in foundations, slabs, and walls in contact with the soil, as well as through piping joints, expansion joints, and water systems, especially when groundwater is used for domestic purposes.

The presence of radon is especially concerning in buildings where people spend prolonged periods. Radon accumulation can significantly increase the risk of lung cancer, especially when combined with tobacco smoke exposure.

Radon mitigation techniques primarily involve active methods, which improve ventilation or increase the air exchange rate within buildings. Inadequate ventilation can lead to elevated indoor radon concentrations. Methods include natural ventilation of basements, air chambers, or upper floors, preferred over mechanical ventilation, mechanical ventilation of basements or air chambers, and soil depressurization systems.

Other techniques include passive methods that focus on preventing radon from entering buildings by sealing the interface between the soil and the structure. Plastic membranes and polymers are commonly used for this purpose but do not provide a complete seal, allowing radon to migrate into the building. Additionally, these materials are fragile and can easily be punctured during installation. Various materials, such as varnishes, water repellents, and liquid silicones, have been used to seal joints and cracks in walls and floors, but their effectiveness in blocking radon remains uncertain. Furthermore, chemical products with excellent adhesion properties, such as chloroprene, polyvinyl acetate, and polyacrylic acid esters, may release toxic gases when exposed to fire, creating environmental and health concerns.

Radon can infiltrate buildings through cracks and joints in walls, particularly at penetration points for utilities. To address this, radon-resistant membranes can be applied at the interface between the building and the ground. However, these membranes often fail to provide an airtight seal. The introduction of radon-resistant membranes, applied either preventively during construction or as a corrective measure in existing buildings, can effectively reduce radon levels.

For buildings with crawl spaces or slab foundations in direct contact with soil, radon mitigation can involve applying radon-impermeable membranes, sealing cracks and joints, and installing radon extraction systems beneath the slab.

Thicker membranes typically offer better mechanical properties and impermeability but can be difficult to install in areas with sharp angles or small radii. Some membranes are designed to withstand pedestrian traffic and light machinery, which is crucial for practical applications. In cases where membranes are used beneath concrete slabs, they must be durable enough to endure the pressures they will face.

The document KR102017008B1 describes an aqueous coating composition for radon reduction, which can increase the durability of concrete by inhibiting the penetration and the permeation of not only radon, but also gases such as water vapor, volatile organic compounds, organic gases, inorganic gases, or the like, and liquids such as water or the like, but the fragility of the coating film raises concerns about its long-term effectiveness.

Therefore, there is a need for radon-blocking technologies that can be widely applied to reduce radon infiltration through cracks and crevices in buildings and construction materials, while being eco-friendly and harmless to human health. Such technologies are expected to have widespread applicability across various fields.

These facts are disclosed in order to illustrate the technical problem addressed by the present disclosure.

### GENERAL DESCRIPTION

The present disclosure relates to a multilayer radon-impermeable barrier material.

The present disclosure relates to a multilayer radon-impermeable barrier material comprising a multilayer structure with at least the following layers: a substrate layer, at least one outer layer fitted on top of the substrate layer, wherein the at least one outer layer comprises a material selected from a list consisting of cellulose, resin, and their combinations; wherein the multilayer radon-impermeable barrier material exhibits a radon gas permeability such that, when subjected to a radon concentration of at least 45,000 Bq/m³ on one side of the material under controlled test conditions, the radon flux measured on an opposite side of the material is less than 1 Bq/h, ensuring long-lasting protection against radon infiltration.

The present disclosure is related to a novel radon-impermeable material designed to prevent radon gas infiltration into buildings. This material is intended for use in construction elements such as wall coatings, floor coverings, and other building materials that provide a protective barrier against radon gas. It falls within the technical fields of building materials, environmental safety, and radon mitigation technologies, utilizing a passive method to improve indoor air quality and environmental health

This disclosure introduces a multilayer radon-impermeable barrier material for construction applications, made from materials with porosity ranging below 1 to 5%, preferably below 1%, as assessed by structural imaging and gravimetric resin uptake, combined with functional gas-barrier performance, and a pore size smaller than the molecular diameter of radon, which is calculated in 0.24 nanometres, effectively preventing the infiltration of this gas into buildings. Without being bound by theory, the low radon permeability may be associated with a highly densified microstructure resulting from resin impregnation and curing.

The proposed technical solution aims to protect public health by mitigating the risks associated with radon exposure, a radioactive gas that accumulates in indoor environments and is linked to conditions such as lung cancer. The material is applicable in various construction settings, including wall coatings, floor coverings, and other building materials, providing a critical solution for radon mitigation. It offers a durable and effective method for blocking radon infiltration, making it an essential component in building construction and renovation.

Not only does it improve public health by reducing radon-related risks, but it also promotes sustainable building practices. The material offers a safer, more durable alternative to conventional radon-mitigation materials, which often fail to meet modern safety standards. Additionally, it improves indoor air quality and environmental health by preventing the release of harmful volatile compounds, distinguishing it from traditional radon mitigation methods, such as plastic membranes or chemical adhesives that may present environmental or health concerns.

Unlike traditional methods relying on ventilation or plastic membranes with limited efficacy, this multilayer radon-impermeable barrier material for construction applications provides a permanent solution that can be seamlessly integrated into various construction elements. The design of this barrier addresses challenges such as deterioration over time, being capable of resisting crack formation, degradation due to humidity, and mechanical stress.

This multilayer radon-impermeable barrier material for construction applications is ideal for both new construction projects and retrofitting existing buildings. It offers an additional layer of protection against radon, ensuring long-term safety. Furthermore, its environmentally friendly composition, made from sustainable materials that do not release harmful volatile compounds during or after application, sets it apart from other radon-mitigation methods.

This technology is particularly relevant in regions with high radon concentrations and can be used in residential, commercial, and healthcare buildings. It provides a reliable, long-lasting solution to reduce radon exposure, contributing to public health protection and enhancing safety practices in construction across various settings.

The present disclosure describes a multilayer radon-impermeable material designed to prevent or reduce radon gas infiltration into buildings through a passive method.

The present disclosure describes a multilayer radon-impermeable barrier material comprising a multilayer structure with at least the following layers: a substrate layer, at least one outer layer fitted on top of the substrate layer, wherein the at least one outer layer comprises a cellulose layer and a resin material; wherein the multilayer radon-impermeable barrier material exhibits a radon gas permeability such that when subjected to a radon concentration of at least 45,000 Bq/m³ on one side of the material, the radon flux measured on an opposite side of the material is less than 1 Bq/h.

In an embodiment, the multilayer radon-impermeable material is designed to prevent or reduce radon gas infiltration into buildings through a passive method that comprises one substrate layer and at least one outer layer.

In an embodiment, the substrate layer of the multilayer radon-impermeable barrier material designed to prevent or reduce radon gas infiltration into buildings by a passive method comprises a structure that provides mechanical strength and facilitates its application in the construction sector, as well as the possibility of applying an outer layer.

In an embodiment, the substrate layer of the multilayer radon-impermeable barrier material designed to prevent or reduce radon gas infiltration into buildings by a passive method comprises a structure that is resistant to environmental factors such as humidity, temperature variations, and mechanical stress, thereby promoting durability.

In an embodiment, the substrate layer of the multilayer radon-impermeable barrier material is designed to prevent radon gas infiltration into buildings by a passive method comprising environmentally sustainable materials that do not emit harmful volatile compounds.

In an embodiment, the at least one outer layer of the multilayer radon-impermeable barrier material designed to prevent or reduce radon gas infiltration into buildings by a passive method comprises a paper with resin that has very low porosity and small pore size, impregnated on at least one side of the substrate layer.

In an embodiment, the at least one outer layer of the multilayer radon-impermeable barrier material designed to prevent or reduce radon gas infiltration into buildings by a passive method comprises a pore structure smaller than the size of the radon atom, approximately 0.24 nanometres, ensuring effective prevention of radon infiltration over extended periods.

In an embodiment, the at least one outer layer of the multilayer radon-impermeable barrier material can be implemented using materials of various compositions, provided they meet the technical criterion of radon impermeability, ensuring effective protection against the risks associated with prolonged exposure to this gas.

In an embodiment, the at least one outer layer of the multilayer radon-impermeable barrier material is manufactured using a method that optimizes pore size and distribution within the material to achieve radon-blocking properties, without compromising the structural integrity of the material.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the multilayer radon-impermeable barrier material for construction applications (1) applied to different construction elements, such as walls (2), floors (3) and/or foundations (4), and a zoom of its microporous structure.
**Figure 2****:** Schematic representation of the method for producing the multilayer radon-impermeable barrier material for construction applications.
**Figure 3****:** Schematic representation of the comparison between a traditional building material (7) without (i) and a building material (7) with the multilayer radon-impermeable barrier material for construction applications (ii), emphasizing that cracks (5) in traditional materials allow radon gas (6) infiltration, while the multilayer radon-impermeable barrier material (1) prevents this.
**Figure 4****:** Schematic representation of an embodiment of the multilayer radon-impermeable barrier material for construction applications (1) applied to different construction elements, such as walls (2) (i), floors (3) (ii), and foundations (4) (iii).

### DETAILED DESCRIPTION

The present disclosure relates to a multilayer radon-impermeable barrier material.

It is described a multilayer radon-impermeable barrier material comprising a multilayer structure with at least the following layers: a substrate layer, at least one outer layer fitted on top of the substrate layer, wherein the at least one outer layer comprises a cellulose layer and a resin material; wherein the multilayer radon-impermeable barrier material exhibits a radon gas permeability such that, when subjected to a radon concentration of at least 45,000 Bq/m³ on one side of the material, under controlled test conditions, the radon flux measured on an opposite side of the material is less than 1 Bq/h.

In an embodiment, the radon flux measured on an opposite side of the multilayer radon-impermeable barrier material is less than 0.5 Bq/h, preferably less than 0.1 Bq/h, for better results.

In an embodiment, the pore size of the outer layer of the multilayer radon-impermeable barrier material is smaller than 0.24 nm, preferably ranges from 0.01 nm to 0.23 nm, more preferably from 0.05 nm to 0.20 nm, even more preferably from 0.10 nm to 0.15 nm, for better results; and/or the porosity ranges from below 1 to 5%, preferably below 1%, measured by scanning electron microscopy analysis or as assessed by structural imaging and gravimetric resin uptake, combined with functional gas-barrier performance.

In an embodiment, the pore size of the outer layer is reduced by resin application on the cellulose layer such that radon gas permeability is, when subjected to a radon concentration of at least 45,000 Bq/m³ on one side of the material, the radon flux measured on an opposite side of the material is less than 1 Bq/h.

In an embodiment, the resin is impregnated in the cellulose layer.

In an embodiment, the multilayer radon-impermeable barrier material further comprises a reinforcement layer.

In an embodiment, the reinforcement layer of the multilayer radon-impermeable barrier material comprises a woven or non-woven fabric material selected from a list consisting of fiberglass, polyester, nylon, and combinations thereof.

In an embodiment, the multilayer radon-impermeable barrier material further comprises a top protective coating layer, preferably a coating layer resistant to ultraviolet radiation and/or environmental degradation.

In an embodiment, the top protective coating layer of the multilayer radon-impermeable barrier material comprises a pressure-sensitive adhesive or a thermoplastic bonding agent.

In an embodiment, the resin of the multilayer radon-impermeable barrier material is selected from a list consisting of high-density polyethylene, ethylene vinyl alcohol, polyvinylidene chloride, polyamide, low-density polyethylene, polypropylene, polycarbonate, ethylene vinyl acetate, acrylic-based resins, polyethylene terephthalate, chlorinated polyethylene, thermoplastic polyurethane, epoxy resin, silicone-based coatings, fluoropolymer, and their combinations.

In an embodiment, the substrate of the multilayer radon-impermeable barrier material is selected from a list consisting of high-density polyethylene, low-density polyethylene, polypropylene, polyvinyl chloride, ethylene vinyl alcohol, thermoplastic polyurethane, non-woven geotextiles, woven geotextiles, aluminium foil, copper foil, fiberglass mats, fiberglass fabric, reinforced polymeric fabrics, polymer-modified bitumen, multi-axial composite fabrics, cement-based boards, and their combinations.

It is also disclosed the use of the described multilayer radon-impermeable barrier material as a radon barrier in particular as a radon barrier in buildings or constructions.

It is also disclosed an article to reduce or prevent radon gas infiltration into a building, the article comprising the disclosed multilayer radon-impermeable barrier material; preferably the article is a wall coating, a floor covering, a ceiling coating or lining, a foundation coating, a roofing underlay, a construction membrane, a panel for building construction, a board for building construction, or a sheet for building construction.

It is also disclosed a building comprising the described multilayer radon-impermeable barrier material.

It is also disclosed a method for manufacturing the multilayer radon-impermeable barrier material comprising the following steps: selecting chemical and/or natural components that promote the formation of a stable microporous structure, forming the microporous structure using a process selected form a list consisting of sintering process, controlled polymerization, or deposition techniques to create uniform porosity, curing and finishing the microporous structure using thermal and/or chemical treatments to stabilize the microporous barrier and enhance its mechanical and impermeability properties.

Further details are now provided regarding the impregnation process of an outer layer used to the multilayer radon-impermeable barrier material which exhibits a radon gas permeability such that, when subjected to a radon concentration of at least 45,000 Bq/m³ on one side of the material under controlled test conditions, the radon flux measured on an opposite side of the material is less than 1 Bq/h.

It is expressly noted that the disclosed technology is not limited to a specific impregnation technique, since various impregnation methods may be employed and modified while still achieving the same functional result. The essential aspect of the technology lies in the physical effect obtained, namely the controlled and homogeneous reduction of porosity and pore size to a sub-nanometric scale, combined with a multilayer architecture that provides both resistance to radioactive gas transmission and mechanical resistance to perforation.

In an embodiment, intended for situations involving a lower risk of mechanical damage, the outer layer is formed by an impregnated paper layer applied to the upper surface of a first structural layer of the material (the substrate layer). The paper is first passed through a resin bath at a transport speed greater than 1 m/s in order to ensure uniform and continuous impregnation. After impregnation, the paper layer is positioned on the upper surface of the first material layer and subjected to a pressing operation, followed by thermal curing at a temperature in the range of 150 °C to 250 °C under a pressure from 15 to 35 kg/cm². The resin content in the impregnated paper is greater than 35% by weight (w/w), thereby "ensuring effective obstruction of inter-fibre voids and suppression of gas diffusion pathways" and achieving a homogeneous reduction of porosity and pore size to a sub-nanometric level.

In an embodiment, intended for situations involving a higher risk of perforation of the outer layer, a multilayer structure is provided comprising a first structural layer (the substrate layer), an impregnated paper layer, and a second layer providing enhanced mechanical resistance. In this configuration, the impregnated paper layer is positioned at an intermediate level between the external layers, thereby providing increased protection against mechanical damage during installation and use. The impregnated paper layer is produced under conditions substantially identical to those described above, including resin impregnation at a transport speed greater than 1 m/s, subsequent pressing, and curing at a temperature from 150°C to 250 °C under a pressure of 15 to 35 kg/cm², with a resin content exceeding 35%.

The external layers of the multilayer structure are formed from materials selected to provide mechanical resistance to perforation, such that the overall structure exhibits a perforation resistance greater than 200 N. In this manner, the multilayer configuration combines a dedicated layer for mechanical strength with an internal layer specifically configured to exhibit a radon gas permeability such that, when subjected to a radon concentration of at least 45,000 Bq/m³ on one side of the material under controlled test conditions, the radon flux measured on an opposite side of the material is less than 1 Bq/h, thereby ensuring both functional impermeability to radioactive gases and robustness under real-world application conditions.

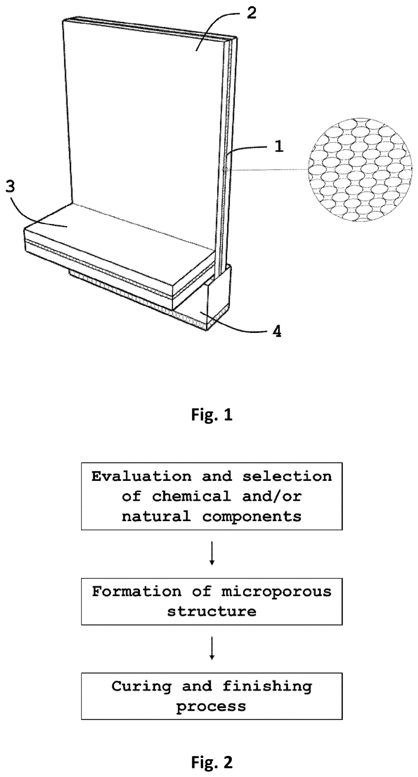

The technology described refers to a multilayer radon-impermeable barrier material for construction applications, as illustrated in Fig. 1, which shows the general structure of the multilayer radon-impermeable barrier material (1). This material comprises at least two layers, a substrate layer and an outer layer, designed to prevent radon infiltration into buildings.

In an embodiment, the substrate layer of the multilayer radon-impermeable barrier material (1) is structured to provide mechanical strength and facilitate its application in the construction sector, and it can be applied to various surfaces such as walls (2), floors (3), and foundations (4). This substrate layer is also designed to be resistant to environmental factors, such as temperature variations, humidity, and mechanical stress, ensuring long-term durability. Additionally, the substrate layer can be composed of sustainable materials that do not emit harmful volatile compounds, distinguishing it from other conventional materials that may release toxic substances during or after application.

In an embodiment, the outer layer of the multilayer radon-impermeable barrier material (1) is a coating of paper impregnated with resin, with a structure with extremely low porosity and small pore size, smaller than the size of a radon atom, approximately 0.24 nanometers. This outer layer is responsible for effectively blocking the passage of radon into the interior of the building, even in cases of cracks or microcracks that may occur in the substrate layer. The paper resin coating is impregnated in such a way that its porosity and pore size are controlled, ensuring a durable barrier against radon infiltration.

In an embodiment, Fig. 2 illustrates the production process of the multilayer radon-impermeable barrier material (1), which includes the following steps: selection of components that promote the formation of a stable microporous structure, allowing the final material to have pores smaller than 0.24 nm, ensuring its effectiveness in blocking radon; formation of the microporous structure, using processes such as sintering, controlled polymerization, and/or deposition techniques to create uniform porosity in both the inner and outer layers; curing and finishing, through thermal and/or chemical treatments that stabilize the structure of the multilayer radon-impermeable barrier material (1), enhancing its mechanical properties and impermeability, ensuring long-term performance.

In an embodiment, the production process of the multilayer radon-impermeable barrier material, as schematically illustrated in Fig. 2, comprises the selection of components and processing conditions that promote the formation of a highly densified microstructure, capable of eliminating continuous gas diffusion pathways through the material. The formation of said structure is achieved by controlled impregnation, polymerisation and/or deposition techniques, followed by curing and finishing steps that stabilise the impregnated cellulose-resin system and ensure structural continuity at the micro- and nanometric scale. The effectiveness of this densified structure in preventing radon transport is not defined by direct geometrical measurement of individual pore dimensions, but is functionally demonstrated by radon permeability and radon flux measurements under controlled test conditions, which confirm the material's radon-impermeable performance.

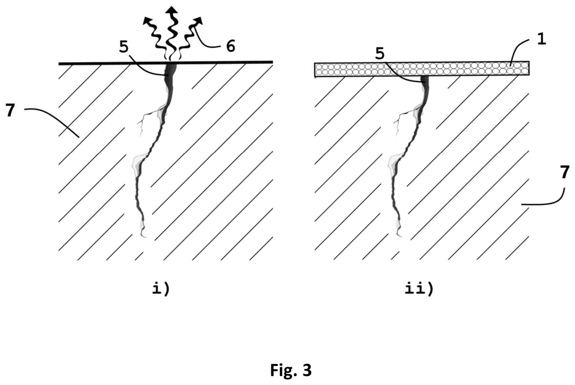

In an embodiment, the substrate and outer layers of the multilayer radon-impermeable barrier material (1) work together to ensure protection against radon infiltration. Fig. 3 shows that traditional construction materials (4) may develop cracks (5), allowing radon gas (6) to pass into the building. However, when the multilayer radon-impermeable barrier material (1) is applied, even if cracks (5) occur, the interior of the building remains protected (ii), preventing radon infiltration.

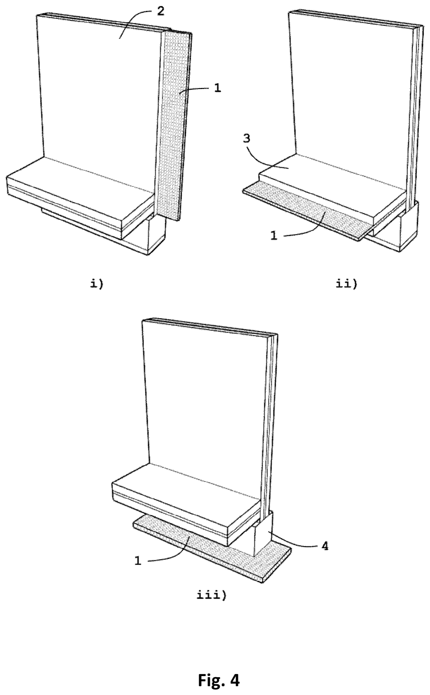

Fig. 4 exemplifies the application of the multilayer radon-impermeable barrier material (1) to various construction elements, such as walls (2) (i), floors (3) (ii), and foundations (4) (iii). The substrate layer can be applied directly to surfaces or as an intermediate layer, while the outer layer of paper resin coating provides the necessary impermeability, with the added benefit of being resistant to adverse environmental factors.

In an embodiment, this multilayer radon-impermeable barrier material (1) is particularly suitable for new construction projects as well as retrofitting existing buildings, especially in areas with high radon concentrations. Its multilayered structure ensures a durable and effective solution for mitigating radon exposure, without compromising the material's integrity and maintaining environmental safety.

In an embodiment, the technology offers several advantages, including resistance to climatic variations, mechanical stresses, and the absence of harmful emissions during or after application. The universal compatibility with various types of construction makes the multilayer radon-impermeable barrier material (1) a reliable and effective solution for protecting buildings against radon infiltration.

The structural characterisation of the multilayer radon-impermeable barrier material, in particular of the at least one outer layer, is performed using scanning electron microscopy (SEM), optionally combined with energy-dispersive spectroscopy (EDS), in order to assess the degree of densification, material continuity, and the absence of cracks, voids, or continuous gas diffusion pathways at the micro- and nanometric scale. The SEM analysis is employed as a qualitative and semi-quantitative tool to verify the effectiveness of the resin impregnation and curing process, including the sealing of inter-fibre voids within the cellulose structure and the formation of a homogeneous densified microstructure. When radon permeability is measured under exposure levels above 45,000 Bq/m³, and the resulting radon flux is below 1 Bq/h (preferably below 0.1 Bq/h), the material necessarily exhibits no continuous diffusion pathways compatible with radon transport, which implies an effective pore size smaller than the kinetic diameter of radon atoms. This approach is fully consistent with established practices in gas-barrier materials, membrane science, and radiation shielding technologies.

Direct geometrical measurement of individual sub-nanometric pore dimensions is not required for the implementation or validation of the disclosed technology. The technology is defined by its functional technical effect, namely the radon impermeability achieved by suppression of continuous diffusion pathways, which is quantitatively verified through radon permeability and radon flux measurements under controlled test conditions. Accordingly, while SEM analysis confirms the structural densification and continuity of the material, the effective pore structure relevant to radon transport is inferred from gas-barrier performance, in accordance with established practices in gas-impermeable barrier materials.

Permeability effectiveness of the material is achieved and verified through a specifically developed validation method, which enables controlled assessment of radon permeability and gas flow passage prior to application of the material in its intended use. This verification step is a critical aspect of the technology, as it ensures that the functional performance of the material is confirmed under controlled and reproducible conditions before deployment.

The validation method is carried out using a dedicated test assembly comprising a lower chamber, an intermediate zone, and an upper chamber, arranged in a vertically aligned configuration. The lower chamber is configured to house a constant-release radioactive sample acting as a radon emission source. This chamber is airtight and constructed from stainless steel in order to prevent unintended leakage and to ensure chemical and radiological stability during testing. The radioactive source provides a controlled and repeatable radon emission, thereby enabling consistent test conditions across different material samples.

Above the lower chamber, the intermediate zone is provided for positioning the material sample to be tested. The material is arranged such that any radon gas migrating from the lower chamber toward the upper chamber must necessarily pass through the material. This configuration ensures that the measured radon concentration downstream is directly attributable to the permeability characteristics of the tested material.

The upper chamber is designed to receive radon gas that has passed through the material sample. Within this upper chamber, the flow and concentration of radon gas are continuously monitored using dedicated measuring equipment. The detected radon concentration provides a quantitative indication of the permeability and flow passage properties of the material under test.

In an embodiment, the measurements were performed using a professional radon monitoring system, such as AlphaGUARD PR02000, equipped with associated accessories for controlled sampling and data acquisition software, such as SoftwareDataEXPERT. In a possible embodiment used, the monitoring system comprises a portable radon detector operating either on battery or mains power, with a high data storage capacity. The detector is capable of measuring radon concentration in air while simultaneously recording ambient temperature, relative humidity, and atmospheric pressure through integrated sensors. The combination of radon concentration data with environmental parameters allows reliable interpretation of the results while accounting for spatial and temporal variations. The radon detector operates on the basis of a pulse-mode ionisation chamber employing alpha spectroscopy, wherein the interaction of alpha radiation within the detector generates voltage pulses. Owing to the geometry of the chamber and the associated signal processing, the detector is suitable for continuous monitoring of radon concentrations over a wide measurement range, enabling both short-term and long-term measurements. This configuration ensures rapid response and high sensitivity, making it suitable for laboratory-based validation as well as potential field-related assessments.

Measured data was stored and managed using dedicated database software, which records radon concentration values together with uncertainty data, environmental parameters, and system status information. The software enables real-time or offline analysis, graphical visualisation, and export of data for further processing and documentation. This facilitates systematic comparison of different material samples and supports reproducibility of the validation method.

Gas transport from the test assembly to the radon detector is achieved using a sampling pump, such as AlphaPUMP, configured to provide a controlled and adjustable flow rate. The pump includes internal filtration to prevent contamination or damage due to moisture ingress and ensures stable transport of radon gas, ranging from 0.03 to 1 L/min, from the upper chamber to the detector's measurement chamber. In a representative test configuration, the pumping rate is maintained at a constant value to ensure comparability between measurements.

Using this validation setup, multiple tests were conducted over time on different material samples, with radon concentration measured in the upper chamber to determine permeability performance. This method enables objective, quantitative verification of the material's functional effectiveness prior to application, thereby ensuring that only materials meeting the required permeability criteria are deployed in practical implementations.
For comparative purposes, commercially available market products, specifically membrane-based solutions, were tested using the same validation method and experimental setup described above. The measurements were carried out after a defined elapsed time of 11.7 days from the closure of the test container, thereby ensuring stabilised test conditions. The results are included in Table 1.

**Table 1 - Results obtained for commercially available market products.**

| | Time since container closure (days) | CRn (Bq/m³) | Temperature (°C) | Relative humidity (%) | Atmospheric pressure (mbar) | Exhalation rate (Bq/m²/h) | Flow (Bq/h) |
|---|---|---|---|---|---|---|---|
| B020 ST 15 + KEN Exterior Plastic Paint 1 | 11.7 | 48 614 | 25 | 60 | 1005 | 104.9 | 1.75 |
| B020 MR 16 + KEN Exterior Plastic Paint 2 | 11.7 | 46 963 | 26 | 58 | 1005 | 100.7 | 1.68 |

In a first comparative test, identified as sample B020 ST 15 combined with an external plastic coating formulation, the measured radon concentration (CRn) within the upper chamber reached a value of 48614 Bq/m³. During this measurement, the ambient temperature was 25°C, the relative humidity was 60%, and the atmospheric pressure was 1005 mbar. Under these conditions, the calculated radon exhalation rate was 104.9 Bq/m²/h, corresponding to a total radon flux of 1.75 Bq/h passing through the tested membrane system.

In a second comparative test, identified as sample B020 MR 16 combined with an external plastic coating formulation, the measured radon concentration after the same elapsed time of 11.7 days was 46963 Bq/m³. The environmental parameters recorded during this test included an ambient temperature of 26°C, a relative humidity of 58%, and an atmospheric pressure of 1005 mbar. The resulting radon exhalation rate was calculated to be 100.7 Bq/m²/h, corresponding to a radon flux of 1.68 Bq/h.

Using substantially identical environmental and temporal conditions, table 2 illustrates the obtained result with the multilayer radon-impermeable barrier material disclosed on the present application.

**Table 2 - Results obtained for disclosed multilayer radon-impermeable barrier material.**

| | Time since container closure (days) | CRn (Bq/m³) | Temperature (°C) | Relative humidity (%) | Atmospheric pressure (mbar) | Exhalation rate (Bq/m²/h) | Flow (Bq/h) |
|---|---|---|---|---|---|---|---|
| Sample A | 13.1 | 0 | 23 | 64 | 1008 | 0.0 | 0.00 |
| Sample B | 13.1 | 113 | 23 | 62 | 1008 | 0.2 | 0.00 |
| Sample C | 13.1 | 13 | 24 | 60 | 1008 | 0.0 | 0.00 |
| Sample D | 13.1 | 0 | 24 | 59 | 1008 | 0.0 | 0.00 |
| Sample E | 13.1 | 13 | 24 | 59 | 1008 | 0.0 | 0.00 |
| Sample F | 13.2 | 57 | 24 | 58 | 1009 | 0.1 | 0.00 |
| Sample G | 13.2 | 108 | 24 | 58 | 1009 | 0.2 | 0.00 |
| Sample H | 13.2 | 168 | 24 | 59 | 1009 | 0.3 | 0.01 |

The developed material and the associated innovation also demonstrate a radon impermeability rate exceeding 99.99% under controlled laboratory test conditions and exceeding 95% under real-scale application conditions when subjected to radioactive gas flow levels above 45000 Bq/m³. Such flow levels correspond to situations of extremely high radon concentration, as measured over a continuous period of fifteen days within a building environment. These results indicate that the material maintains its functional effectiveness even under prolonged exposure to exceptionally high radioactive gas concentrations.

By contrast, currently available solutions on the market, including polymer-based or plastic membrane systems, typically exhibit impermeability levels below 90% under laboratory test conditions. Furthermore, in real-world applications, such solutions are prone to functional degradation due to mechanical perforation occurring during or after installation. Such perforations may result from handling by the applicator, fastening operations, or the presence of structural or inert elements such as nails, anchors, or sharp aggregates. Owing to their limited mechanical resistance to puncture and tearing, these known membranes are susceptible to loss of integrity, leading to uncontrolled leakage pathways for radioactive gas.

In addition to their reduced mechanical robustness, these known solutions demonstrate inferior performance under controlled test conditions and fail to reliably preserve their barrier function once deployed in practical environments. As a result, their effectiveness is highly dependent on flawless installation and the absence of subsequent mechanical stress, conditions that are difficult to guarantee in typical construction or remediation scenarios.

In contrast, the material now disclosed combines a high level of impermeability to radioactive gas with enhanced mechanical resistance to perforation, thereby providing a more reliable and durable barrier solution. This combination ensures that the impermeability performance verified during laboratory testing is substantially preserved during real-scale application, even in the presence of installation-related stresses and structural interactions.

These comparative results, obtained under substantially identical environmental and temporal conditions, demonstrate that membrane-based solutions available on the market allow a significant passage of radon gas when subjected to high-concentration exposure. The measured radon flux and exhalation rates confirm that such solutions exhibit limited impermeability performance under controlled laboratory conditions, thereby supporting the conclusion that their barrier effectiveness is substantially lower than that achieved by the material according to the present invention when evaluated using the same methodology.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A multilayer radon-impermeable barrier material comprising a multilayer structure with at least the following layers:
a substrate layer,
at least one outer layer fitted on top of the substrate layer,
wherein the at least one outer layer comprises a cellulose layer and a resin material;
wherein the multilayer radon-impermeable barrier material exhibits a radon gas permeability such that when subjected to a radon concentration of at least 45,000 Bq/m³ on one side of the material, the radon flux measured on an opposite side of the material is less than 1 Bq/h.

2. The multilayer radon-impermeable barrier material according to the previous claim, wherein the radon flux measured on an opposite side of the material is lower than 0.5 Bq/h, preferably lower than 0.1 Bq/h.

3. The multilayer radon-impermeable barrier material according to any of the previous claims, wherein the pore size of the outer layer is smaller than 0.24 nm, preferably ranging from 0.01 nm to 0.23 nm, more preferably from 0.05 nm to 0.20 nm, even more preferably from 0.10 nm to 0.15 nm; and/or the porosity ranges from below 1% to 5% preferably below 1% measured by scanning electron microscopy analysis.

4. The multilayer radon-impermeable barrier material according to any of the previous claims, wherein the pore size of the outer layer is reduced by resin impregnation of the cellulose layer, resulting in a homogeneous densified microstructure that suppresses radon gas transport through the material, such that radon gas permeability is, when subjected to a radon concentration of at least 45,000 Bq/m³ on one side of the material, the radon flux measured on an opposite side of the material is less than 1 Bq/h.

5. The multilayer radon-impermeable barrier material according to any of the previous claims wherein the resin is impregnated in the cellulose layer, thereby sealing inter-fibre voids and eliminating radon diffusion pathways.

6. The multilayer radon-impermeable barrier material according to any of the previous claims, further comprising a reinforcement layer.

7. The multilayer radon-impermeable barrier material according to the previous claim, wherein the reinforcement layer comprises a woven or non-woven fabric material selected from a list consisting of fiberglass, polyester, nylon, and combinations thereof.

8. The multilayer radon-impermeable barrier material according to any of the previous claims, further comprising a top protective coating layer, preferably a coating layer resistant to ultraviolet radiation and/or environmental degradation.

9. The multilayer radon-impermeable barrier material according to any of the previous claims, wherein the top protective coating layer comprises a pressure-sensitive adhesive or a thermoplastic bonding agent.

10. The multilayer radon-impermeable barrier material according to any of the previous claims, wherein the resin is selected from a list of materials comprising intrinsically low gas permeability, including but not limited to high-density polyethylene, ethylene vinyl alcohol, polyvinylidene chloride, polyamide, low-density polyethylene, polypropylene, polycarbonate, ethylene vinyl acetate, acrylic-based resins, polyethylene terephthalate, chlorinated polyethylene, thermoplastic polyurethane, epoxy resin, silicone-based coatings, fluoropolymer, and their combinations.

11. The multilayer radon-impermeable barrier material according to any of the previous claims, wherein the substrate layer is selected from a list consisting of high-density polyethylene, low-density polyethylene, polypropylene, polyvinyl chloride, ethylene vinyl alcohol, thermoplastic polyurethane, non-woven geotextiles, woven geotextiles, aluminium foil, copper foil, fiberglass mats, fiberglass fabric, reinforced polymeric fabrics, polymer-modified bitumen, multi-axial composite fabrics, cement-based boards, and their combinations.

12. Use of the multilayer radon-impermeable barrier material of any of the previous claims as a radon barrier.

13. An article to reduce or prevent radon gas infiltration into a building, the article comprising the multilayer radon-impermeable barrier material of any of the previous claims 1 to 11, preferably a wall coating, a floor covering, a ceiling coating or lining, a foundation coating, a roofing underlay, a construction membrane, a panel for building construction, a board for building construction, or a sheet for building construction.

14. A building comprising the multilayer radon-impermeable barrier material of any of the previous claims 1 to 11.

15. A method for manufacturing the multilayer radon-impermeable barrier material of any of the previous claims 1 to 11, comprising the following steps:
selecting chemical and/or natural components that promote the formation of a densified microstructure without continuous gas diffusion pathways,
forming said structure by controlled impregnation, polymerization and/or deposition techniques,
curing and finishing the structure to stabilize the material and achieve functional radon impermeability, as verified by radon flux testing under controlled conditions.
